(19) Europäisches Patentamt / European Patent Office / Office européen des brevets

(11) **EP 3 972 935 B1**

(12) **EUROPÄISCHE PATENTSCHRIFT**

(45) Veröffentlichungstag und Bekanntmachung des Hinweises auf die Patenterteilung:
**09.10.2024   Patentblatt 2024/41**

(21) Anmeldenummer: **19726627.3**

(22) Anmeldetag: **21.05.2019**

(51) Internationale Patentklassifikation (IPC):
**C01B 33/035** (2006.01)

(52) Gemeinsame Patentklassifikation (CPC):
**C01B 33/035**

(86) Internationale Anmeldenummer:
**PCT/EP2019/063112**

(87) Internationale Veröffentlichungsnummer:
**WO 2020/233797 (26.11.2020 Gazette 2020/48)**

(54) **VERFAHREN ZUR HERSTELLUNG VON POLYKRISTALLINEM SILICIUM**

PROCESS FOR PRODUCING POLYCRYSTALLINE SILICON

PROCÉDÉ DE PRODUCTION DE SILICIUM POLYCRISTALLIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.03.2022   Patentblatt 2022/13**

(73) Patentinhaber: **Wacker Chemie AG**
**81671 München (DE)**

(72) Erfinder:
• **BÖNISCH, Paul**
**84561 Mehring (DE)**
• **FILAR, Piotr**
**84533 Marktl (DE)**

(74) Vertreter: **Belz, Ferdinand et al**
**Wacker Chemie AG**
**Gisela-Stein-Straße 1**
**81671 München (DE)**

(56) Entgegenhaltungen:
EP-A1- 2 662 335          EP-A2- 1 992 593
WO-A1-2015/014590      US-A1- 2012 322 175

**Beschreibung**

Die Erfindung betrifft ein Verfahren zur Herstellung von polykristallinem Silicium, wobei während des Verfahrens die Morphologie des Siliciums anhand einer Kennzahl $M$ bestimmt wird und das Verfahren derart gesteuert wird, dass $M$ einen Wert von 0.8 bis 2.5 annimmt.

Polykristallines Silicium (Polysilicium) dient als Ausgangsmaterial bei der Herstellung von einkristallinem (monokristallinem) Silicium, beispielsweise mittels Tiegelziehen (Czochralski- oder CZ-Verfahren) oder mittels Zonenschmelzen (Floatzone-Verfahren). Einkristallines Silicium wird in der Halbleiterindustrie zur Fertigung von elektronischen Bauelementen (Chips) verwendet.

Ferner wird Polysilicium zur Herstellung von multikristallinem Silicium, beispielsweise mittels Blockgussverfahren, benötigt. Das in Form eines Blocks erhaltene multikristalline Silicium kann zur Fertigung von Solarzellen eingesetzt werden.

Polysilicium kann durch das Siemens-Verfahren - ein chemischer Gasphasenabscheidungsprozess - gewonnen werden. Dabei werden in einem glockenförmigen Reaktor (Siemens-Reaktor) Trägerkörper (üblicherweise aus Polysilicium) durch direkten Stromdurchgang erhitzt und ein Reaktionsgas enthaltend eine siliciumhaltige Komponente und Wasserstoff eingeleitet. Die siliciumhaltige Komponente ist in der Regel Monosilan ($SiH_4$) oder ein Halogensilan der allgemeinen Zusammensetzung $SiH_nX_{4-n}$ (n = 0, 1, 2, 3; X = Cl, Br, I). Üblicherweise handelt es sich um ein Chlorsilan oder Chlorsilangemisch, für gewöhnlich um Trichlorsilan ($SiHCl_3$, TCS). Überwiegend wird $SiH_4$ oder TCS im Gemisch mit Wasserstoff eingesetzt. Der Aufbau eines typischen Siemens-Reaktors ist beispielsweise in der EP 2 077 252 A2 oder EP 2 444 373 A1 beschrieben. Der Boden des Reaktors (Bodenplatte) ist generell mit Elektroden versehen, welche die Trägerkörper aufnehmen. Bei den Trägerkörpern handelt es sich für gewöhnlich um Filamentstäbe (Dünnstäbe) aus Silicium. Üblicherweise werden zwei Filamentstäbe mit einer Brücke (aus Silicium) zu einem Paar verbunden, das über die Elektroden einen Stromkreis bildet. Die Oberflächentemperatur der Filamentstäbe beträgt üblicherweise während der Abscheidung mehr als 1000°C. Bei diesen Temperaturen zersetzt sich die siliciumhaltige Komponente des Reaktionsgases und elementares Silicium scheidet sich aus der Gasphase als Polysilicium ab. Dadurch nimmt der Durchmesser der Filamentstäbe und der Brücke zu. Nach dem Erreichen eines vorgegebenen Durchmessers der Stäbe wird die Abscheidung üblicherweise gestoppt und die erhaltenen Polysiliciumstäbe ausgebaut. Nach dem Entfernen der Brücke werden annähernd zylinderförmige Siliciumstäbe erhalten.

Die Morphologie des Polysiliciums bzw. der Polysiliciumstäbe und der aus diesen erzeugten Bruchstücken hat generell einen starken Einfluss auf die Performance bei der Weiterverarbeitung. Grundsätzlich wird die Morphologie eines Polysiliciumstabes von den Parametern des Abscheideprozesses bestimmt (z.B. Stabtemperatur, Silan- und/oder Chlorsilankonzentration, spezifischer Durchfluss). In Abhängigkeit der Parameter können sich ausgeprägte Grenzflächen bis hin zu Löchern und Gräben formieren. Diese verteilen sich in der Regel nicht homogen im Inneren des Stabes. Vielmehr können sich durch Variation der Parameter Polysiliciumstäbe mit verschiedenen (meist konzentrischen) Morphologiebereichen ausbilden wie dies beispielsweise in der EP 2 662 335 A1 beschrieben ist. Die Abhängigkeit der Morphologie von der Stabtemperatur kommt z.B. in der US 2012/0322175 A1 zum Ausdruck. Hier ist ein Verfahren zur Kontrolle der Oberflächentemperatur durch eine Widerstandsmessung bei zumindest einem Polysiliciumstab während der Abscheidung beschrieben. Das Verfahren erlaubt jedoch keine Rückschlüsse über die Morphologie des Siliciums, vielmehr setzt es eine gleichbleibende Morphologie voraus.

EP 1 992 593 A2 beschreibt ein Verfahren zur Herstellung eines Polysiliciumstabs, wobei während der Abscheidung in Abhängigkeit des heranwachsenden Durchmessers des Siliciumstabs die Reaktionsbedingungen geändert werden, um koaxiale Bereiche verschiedener Kristallstrukturen zu realisieren.

WO 2015/014590 A1 beschreibt ein Verfahren zur Herstellung von Polysilicium, bei welchem durch ein Schauglas in der Reaktorwand eine unbeeinflusste Temperaturmessung der Staboberfläche erfolgt.

Die Morphologie von Polysilicium kann von kompakt und glatt bis hin zu sehr porös und zerklüftet variieren. Kompaktes Polysilicium ist im Wesentlichen frei von Rissen, Poren, Fugen und Klüften. Die Rohdichte derartigen Polysiliciums kann mit der Reindichte von Silicium gleichgesetzt werden oder entspricht dieser zumindest in guter Näherung. Die Reindichte von Silicium beträgt 2,329 g/cm$^3$.

Eine poröse und zerklüftete Morphologie hat insbesondere negative Auswirkungen auf das Kristallisationsverhalten von Polysilicium. Besonders stark zeigt sich dies beim CZ-Verfahren zur Herstellung von einkristallinem Silicium. Hier führt der Einsatz von zerklüftetem und porösem Polysilicium zu wirtschaftlich inakzeptablen Ausbeuten. Generell führt beim CZ-Verfahren besonders kompaktes Polysilicium zu deutlich höheren Ausbeuten. Allerdings ist die Erzeugung von kompaktem Polysilicium für gewöhnlich teurer, da ein längerer Abscheideprozess erforderlich ist. Ferner setzen nicht alle Anwendungen den Einsatz von besonders kompaktem Polysilicium voraus. Beispielsweise sind die Anforderungen an die Morphologie bei der Herstellung von multikristallinem Silicium nach dem Blockgussverfahren deutlich geringer. Generell erreicht ein Kristallisationsverfahren oder eine bestimmte Ausprägung eines solchen Verfahrens ein wirtschaftliches Optimum, wenn als Ausgangsmaterial Polysilicium eingesetzt wird, dessen Morphologie einen Grenzwert nicht übersteigt.

Entsprechend wird Polysilicium neben der Reinheit und der Bruchgröße auch nach seiner Morphologie unterschieden und klassifiziert. Da unter dem Begriff Morphologie verschiedene Parameter wie beispielsweise Porosität (Summe aus geschlossener und offener Porosität), spezifische Oberfläche, Rauheit, Glanz und Farbe zusammengefasst werden können, stellt eine reproduzierbare Bestimmung der Morphologie eine große Herausforderung dar. Eine optische Begutachtung der Polysiliciumstäbe oder -bruchstücke nach der Abscheidung, wie u.a. in der WO 2014/173596 A1 vorgeschlagen, hat den Nachteil, dass sich die Morphologie im Inneren gegebenenfalls deutlich von der Morphologie der Oberfläche unterscheiden kann.

Beispielsweise kann zur Bestimmung der Porosität das Volumen des Prüfobjekts mittels Differenzmethode bestimmt und anschließend die effektive mit der spezifischen Dichte verglichen werden. Im einfachsten Fall wird dabei das Prüfobjekt in einen vollen Wasserbehälter getaucht, wobei das Volumen des übergelaufenen Wassers dem des Prüfobjekts entspricht. Angewendet auf Polysilicium muss ein geeignetes Fluid genutzt werden, um eine Oxidation und Verunreinigung zu vermeiden und die Oberfläche komplett zu benetzen. Insbesondere bei durch das Siemens-Verfahren hergestellten Polysiliciumstäben, die eine Länge zwischen 2 und 4 m aufweisen können, ist dies mit einem erheblichen Aufwand verbunden. Möglichkeiten zur Dichtemessung bei Polysilicium sind beispielsweise in der WO 2009/047107 A2 beschrieben. Grundsätzlich ist bei einer nachträglichen Betrachtung der Morphologie von Nachteil, dass es für eine Beeinflussung des Abscheidungsprozesses und damit zu einer Steuerung der Morphologie zu spät ist.

Der Erfindung lag die Aufgabe zugrunde, ein Verfahren zur Bestimmung der Morphologie von Polysilicium während der Abscheidung bereitzustellen, um die Herstellung und Verarbeitung des Polysiliciums effizienter zu gestalten.

Diese Aufgabe wird gelöst durch ein Verfahren zur Herstellung von Polysilicium, umfassend Einleiten eines Reaktionsgases, das neben Wasserstoff Silan und/oder zumindest ein Halogensilan enthält, in einen Reaktionsraum eines Gasphasenabscheidungsreaktors, wobei der Reaktionsraum mindestens einen durch Stromdurchgang erhitzten Filamentstab umfasst, auf welchem durch Abscheidung Silicium unter Bildung eines polykristallinen Siliciumstabs abgeschieden wird. Zur Bestimmung der Morphologie des Siliciumstabs wird während der Abscheidung bei einer mittleren Stabtemperatur $Ts$

- ein erster Widerstandswert $R_1$ des Siliciumstabs bestimmt nach

$$R_1 = \frac{U}{I}$$

mit

$U$ = Spannung zwischen zwei Enden des Siliciumstabs [V],
$I$ = Stromstärke [A]

- ein zweiter Widerstandswert $R_2$ des Siliciumstabs bestimmt nach

$$R_2 = \rho \frac{L}{A}$$

mit

$\rho$ = spezifischer Widerstand von Silicium [Q*m],
$L$ = Länge des Siliciumstabs [m],
$A$ = Querschnittsfläche des Siliciumstabs [m$^2$],

und aus dem Verhältnis $R_1/R_2$ eine Morphologiekennzahl $M$ berechnet, wobei die Abscheidung (in Abhängigkeit von $M$) derart gesteuert wird, dass $M$ einen Wert von 1 bis 1,8 hat.

Wie eingangs bereits beschrieben kann sich in Abhängigkeit der Abscheidungsparameter Polysilicium mit unterschiedlicher Morphologie ausbilden, wobei auch innerhalb desselben Polysiliciumstabs, insbesondere in radialer Richtung seiner Querschnittsfläche, Bereiche verschiedener Morphologie auftreten können, die durch Grenzflächen voneinander getrennt sind. Unter Morphologie soll hier insbesondere die Zerklüftetheit des Polysiliciums verstanden werden, die sich aus der Häufigkeit und Anordnung von Löchern, Poren und Gräben ergibt. Die Morphologie kann auch als Gesamtporosität des Polysiliciums verstanden werden, die sich zusammensetzt aus der Summe aller Hohlräume, die untereinander und mit der Umgebung in Verbindung stehen und den nicht miteinander verbundenen Hohlräumen. Die Gesamtporosität, d.h. der Anteil des Gesamtporenvolumens (offene und geschlossene Poren) am Gesamtvolumen des Polysiliciums kann gemäß DIN-EN 1936 bestimmt werden.

Es wurde erkannt, dass sich insbesondere die Löcher und Gräben nicht homogen im abgeschiedenen Polysilicium verteilen, sondern inhomogen entsprechend der Abscheidung. Dabei zeigt die Längsrichtung bevorzugt in die radiale Richtung, also in Wachstumsrichtung. Dadurch können bestimmte Transportvorgänge im Polysilicium richtungsabhängig (anisotrop) werden. Anders ausgedrückt kann Polysilicium makroskopisch anisotrope Materialeigenschaften aufweisen.

Besonders relevant ist dieser Effekt beim elektrischen Widerstand $R$, da der Stromfluss überwiegend in axialer Richtung (Längsrichtung) des Polysiliciumstabs erhöht sich $R$ im Vergleich zu kompaktem Polysilicium. $R$ eines Polysiliciumstabs ist also umso größer, je ausgeprägter seine Zerklüftetheit bzw. Porosität ist.

Beim erfindungsgemäßen Verfahren wird die Morphologie unmittelbar während der Aschscheidung bestimmt, wobei ein elektrothermisches Modell zur Anwendung kommt, welches direkt auf Prozessdaten zurückgreift. Eine in der Regel aufwändige und zumeist ungenaue optische Analyse der Polysiliciumstäbe im Ganzen oder im Form von Bruchstücken nach der Abscheidung ist nicht erforderlich. Durch die Verwendung von ohnehin zur Verfügung stehenden Prozessdaten ist die erfindungsgemäße Methode beliebig skalierbar. Die Verwendung der Morphologiekennzahl $M$ zur Prozesssteuerung bietet erhebliches Potenzial zur Qualitätssicherung und Maximierung der Produktivität. Insbesondere lässt sich durch eine permanente Überwachung der Morphologie und eine Prozesssteuerung in Abhängigkeit der Morphologie Polysilicium exakt nach Kundenwunsch herstellen.

Für die Herstellung von Typ A Polysilicium erfolgt die Steuerung vorzugsweise derart, dass M einen Wert von 0,8 bis 1,2 aufweist. Typ A ist in der Regel sehr kompakt und für die Produktion von Halbleitern bestimmt. Insbesondere für das CZ-Verfahren mit dem Ziel der Maximierung der versetzungsfreien Ausbeute.

Für die Herstellung von Typ B Polysilicium erfolgt die Steuerung vorzugsweise derart, dass M einen Wert von 1,2 bis 1,4 aufweist. Typ B weist in der Regel eine mittlere Kompaktheit auf und wird insbesondere für kostenoptimierte robuste Halbleiteranwendungen und anspruchsvolle Solaranwendungen mit monokristallinem Silicium verwendet (CZ-Verfahren).

Für die Herstellung von Typ C Polysilicium, das insbesondere für robuste Solaranwendungen mit monokristallinem Siliciumbenötigt wird, erfolgt die Steuerung vorzugsweise derart, dass M einen Wert von 1,4 bis 1,7 aufweist. Typ C ist weniger kompakt als Typ B, preiswerter und besonders geeignet für Nachchargier-Prozesse beim CZ-Verfahren.

Für die Herstellung von Typ D Polysilicium erfolgt die Steuerung vorzugsweise derart, dass $M$ einen Wert über 1,7 aufweist. Typ C weist einen hohen Anteil an Popcorn auf. Es hat eine relativ zerklüftete Oberfläche und eine hohe Porosität. Es wird insbesondere zur Herstellung von multikristallinem Silicium für Solaranwendungen mittels gerichteter Erstarrung oder Blockgießen eingesetzt.

Besonders bevorzugt weist $M$ einen Wert von 1,2 bis 1,6 auf.

Vorzugsweise wird $M$ während der Abscheidung im Wesentlichen konstant gehalten. Unter "im Wesentlichen" soll insbesondere verstanden werden, dass temporäre Abweichungen von plus/minus 0,1 von einem Sollwert für $M$ auftreten können.

Die Bestimmung der Kennzahl $M$ kann kontinuierlich während der gesamten Dauer der Abscheidung oder diskontinuierlich zu verschiedenen Zeitpunkten, vorzugsweise in gleichen Zeitintervallen, der Abscheidung erfolgen. Vorzugsweise erfolgt die Bestimmung von $M$ kontinuierlich, um eine besonders präzise Steuerung der Abscheidung zu gewährleisten.

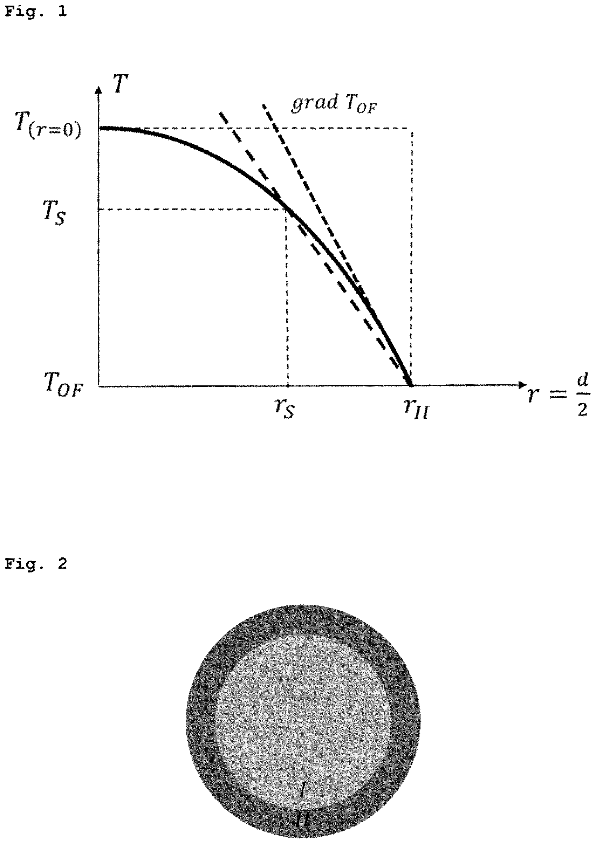

Des Weiteren kann die Bestimmung von M diskretisiert in einem Zeitintervall erfolgen, wobei das Zeitintervall insbesondere einem vorgegebenen Zuwachs des Durchmessers des Siliciumstabs entsprechen kann. Auf diese Weise kann eine Aussage über die Morphologie eines in einem bestimmten Zeitintervall aufgewachsenen Bereichs (koaxialer Bereich) des Siliciumstabs getroffen werden. Diesbezüglich kann auf das Beispiel 2 in Verbindung mit der Figur 2 verwiesen werden.

Bei $M$ handelt es sich um eine dimensionslose Kennzahl, die sich aus dem Verhältnis des ersten unmittelbar messbaren Widerstands $R_1$ zu dem zweiten theoretischen Widerstand $R_2$ ergibt. Je zerklüfteter/poröser ein Polysiliciumstab ist, desto größer ist $M.$ Beispielsweise weisen Polysiliciumstäbe, für die $M$ größer als 1,5 ist, einen erheblichen Anteil an sogenanntem Popcorn auf. Popcorn bedeutet, dass das Polysilicium Risse, Spalten und Sprünge aufweist und infolge dieser Zerklüftetheit eine sehr große Oberfläche hat.

Die Bestimmung von $R_1,$ der auch als Heizwiderstand bezeichnet werden kann, erfolgt aus der am Siliciumstab gemessenen Spannung $U$ und der Stromstärke $I$ nach dem Ohmschen Gesetz. Bei $I$ (Stabstrom) handelt es sich um die Stromstärke, mit welcher ein Filamentstab/Siliciumstab erhitzt wird (Joule-Erwärmung). Bei $U$ handelt es sich um die Spannung, die zur Erzeugung des Stabstroms zwischen den Enden eines Siliciumstabs oder Filamentstabs anliegt. Vorzugsweise handelt es sich bei dem Filamentstab um zwei Dünnstäbe aus Silicium, die über eine Brücke (aus Silicium) zu einem Stabpaar verbunden sind. Die beiden freien Enden des Stabpaares sind üblicherweise mit Elektroden am Reaktorboden verbunden. Die Messung von $U$ und $I$ kann mittels handelsüblicher Messgeräte erfolgen. Für Gewöhnlich werden $U$ und $I$ stets an einem Prozessleitstand angezeigt und ggf. aufgezeichnet.

Die Anzahl der im Gasphasenabscheidungsreaktor angeordneten Siliciumstäbe bzw. Siliciumstabpaare ist für die Ausführung des erfindungsgemäßen Verfahrens generell unerheblich. Vorzugsweise handelt es sich bei dem Gasphasenabscheidungsreaktor um einen Siemens-Reaktor wie er einleitend und beispielsweise in der EP 2 662 335 A1 beschrieben ist. Typische Beispiele für die Anzahl von Siliciumstäben in einem Reaktor sind 36 (18 Stabpaare), 48 (24 Stabpaare), 54 (27 Stabpaare), 72 (36 Stabpaare) oder 96 (48 Stabpaare). Die Siliciumstäbe können zu jedem Zeitpunkt der Abscheidung in guter Näherung als zylinderförmig angesehen werden. Dies insbesondere unabhängig davon, ob die Dünnstäbe zylindrisch oder bspw. quadratisch ausgebildet sind. Entsprechend können zur Bestimmung von $R_1$ auch Mittelwerte von $U$ und $I$ herangezogen werden, die sich beispielsweise aus einer Messung an jedem Stabpaar im Reaktor ergeben.

Die Bestimmung von $R_2$ erfolgt durch Multiplikation des spezifischen Widerstands $\rho$ von Silicium mit der Länge $L$ des Siliciumstabs und Division durch die Querschnittsfläche $A$ des Siliciumstabs.

$L$ entspricht grundsätzlich der Länge des Siliciumstabes, gemessen von einer Elektrode bis zur anderen Elektrode im Reaktorboden. Zur Bestimmung von L wird üblicherweise die Länge des Filamentstabs und ggf. der Brücke zugrunde gelegt. Diese ist bekannt oder kann vor dem Einbau in den Reaktor gemessen werden. Bei einem oben beschriebenen Siliciumstabpaar würde sich $L$ aus der Summe der Längen der beiden Dünnstäbe und der Brücke ergeben. Dass die Form des Siliciumstabs nach der Abscheidung von der des Filamentstabs ggf. abweicht, ist für die Ausführung der Erfindung unerheblich. Ebenso unerheblich ist der Teil der Dünnstäbe, der in den Elektroden oder Elektrodenhalterungen versenkt wird. Dieser kann vernachlässigt werden.

Vorzugsweise beträgt $L$ 2 bis 8 m, besonders bevorzugt 3 bis 7 m, insbesondere 4 bis 6,6 m, insbesondere bevorzugt 5,6 bis 6,4 m.

Die Querschnittsfläche $A$ kann durch Messung des Durchmessers oder Umfangs zumindest eines Siliciumstabs erfolgen. Da davon ausgegangen werden kann, dass die Siliciumstäbe zylindrisch sind und der Durchmesser aller Siliciumstäbe im Reaktor im Wesentlichen gleich ist, insbesondere dann, wenn Messwerte bei gleicher Stabhöhe verglichen werden, kann $A$ nach $A = \pi*d^2/4,$ mit d = Stabdurchmesser, berechnet werden. Diese Näherung ist gerechtfertigt, da moderne Siemens-Reaktoren dafür ausgelegt sind, eine möglichst homogene Abscheidung zu gewährleisten, d.h. Siliciumstäbe gleicher Qualität und Form zu generieren. Dies kann durch einen homogenen Gasfluss innerhalb des Reaktors und eine im Wesentlichen symmetrische Anordnung der Stäbe erreicht werden. An welchem Stab oder an welchen Stäben die Durchmesserbestimmung (gleiches gilt für die Bestimmung der Oberflächentemperatur $T_{OF}$) erfolgt, ist für die Ausführung der Erfindung grundsätzlich unwesentlich.

Vorzugsweise wird zur Bestimmung von A des Siliciumstabs mindestens ein Durchmesser des Siliciumstabes und/oder mindestens ein Durchmesser zumindest eines anderen Siliciumstabes bestimmt. Besonders bevorzugt wird der Durchmesser von mindestens zwei, insbesondere drei oder vier, Siliciumstäben bestimmt. Aus den ermittelten Werten kann ein Mittelwert gebildet werden, wodurch sich die Messgenauigkeit erhöhen lässt.

Die Bestimmung des Durchmessers erfolgt vorzugsweise von außerhalb des Reaktors durch ein Sichtfenster, insbesondere mittels einer Kamera. Es können auch zwei oder mehr Kameras, die unterschiedlich um den Reaktor positioniert sein können, verwendet werden. Vorzugsweise sind die Kameras nebeneinander (in Umfangsrichtung des Reaktors) vor jeweils einem Sichtfenster positioniert. Sie können auch nebeneinander oder übereinander vor einem Sichtfenster positioniert sein. Die Kameras können sich auf unterschiedlicher Höhe befinden. Üblicherweise erfolgt die Durchmesserbestimmung an einem Siliciumstab, der dem Sichtfenster am nächsten ist. Generell ist es nicht wesentlich, ob die Durchmesserbestimmung (gleiches gilt für die Bestimmung der Oberflächentemperatur $T_{OF}$) beispielsweise auf Höhe der Stabmitte (Mitte zwischen Brücke und Elektrode) oder auf Höhe des oberen oder unteren Stabdrittels erfolgt. Vorzugsweise erfolgt die Messung an der Stabmitte.

Bei der Kamera kann es sich um eine optische Kamera (z.B. Digital-/CCD-Kamera) und/oder Thermographiekamera handeln. Der Durchmesser kann durch (insbesondere digitale) Bildbearbeitung von einem oder mehreren der erzeugten Bilder oder auch Bildausschnitten bestimmt werden. Es kann auch vorgesehen sein, ein Video zu erzeugen, wobei vorzugsweise Einzelbilder des Videos einer Bildbearbeitung unterzogen werden. Die Bildbearbeitung kann insbesondere durch eine Software erfolgen, die vorzugsweise in das System des Prozessleitstands integriert ist.

Beispielsweise kann der Durchmesser bestimmt werden, indem der Fokus der Kamera so gewählt wird, dass zumindest ein Siliciumstab in seiner Breite vor der inneren Reaktorwand sichtbar ist. Mittels Pixelanalyse kann dann eine linke Kontur und eine rechte Kontur des Siliciumstabes identifiziert und die dazwischenliegende Strecke bestimmt werden. Die Kamera ist üblicherweise derart kalibriert, dass das mit ihr aufgenommene Bild in seiner Breite einer bestimmten Strecke in Umfangsrichtung auf der Reaktorinnenwand entspricht. Die Reaktorgeometrie, insbesondere der Reaktorumfang auf Höhe der Kamera, ist grundsätzlich bekannt. Die Position des Siliciumstabes und damit dessen Abstand zur Reaktorinnenwand sowie zur Kamera ist üblicherweise ebenfalls bekannt. Es auch möglich, den Abstand zwischen zwei benachbarten Stäben vor der Reaktorwand zu messen und daraus deren Durchmesser, insbesondere mittels Triangulation, zu berechnen. Bei dieser Variante müssen die beiden benachbarten Stäbe nicht notwendigerweise in ihrer vollen Breite erkennbar sein. Durch Korrelation der aus der Reaktorkonfiguration bekannten Strecken bzw. Abstände kann anhand des Abstands der Stäbe zueinander der Durchmesser berechnet werden.

Alternativ oder zusätzlich kann der Durchmesser auch aus in der Regel permanent erfassten Parametern des Abscheidungsprozesses bestimmt werden. Bei den Parametern kann es sich z.B. um den Volumenstrom des Reaktionsgases, die Oberflächentemperatur $T_{OF}$ der Siliciumstäbe, $I$, $U$, $R_1$ und Abscheidedauer handeln. Beispielsweise kann dann unter Verwendung von Vergleichsdaten aus vorherigen Abscheidungsprozessen eine Berechnung des Stabdurchmessers in Abhängigkeit der Abscheidedauer erfolgen.

Der spezifische Widerstand $\rho$ gibt an, welchen elektrischen Widerstand ein Leiter aus einem Material (z.B. Silicium) besitzt, der 1 m lang ist und dabei eine durchgehende Fläche von 1 mm$^2$ aufweist. Grundsätzlich ist $\rho$ abhängig von der Temperatur. $\rho$ von Silicium kann Tabellenwerken (vgl. Chemische Enzyklopädie, Moskau, 1990; Band 2: Seite 1007, vgl. auch Tabelle 2) entnommen werden und liegt in dem für die Abscheidung relevanten Temperaturbereich von 800 bis 1300°C bei Werten von 0,00001 und 0,0005 2*m. Der Bestimmung der mittleren Stabtemperatur $Ts$, bei welcher sowohl $R_1$ als auch $R_2$ ermittelt werden, kommt daher eine besondere Bedeutung zu.

$Ts$ wird als Oberflächentemperatur $T_{OF}$ des Siliciumstabs oder als ein Mittelwert aus zwei oder mehr Oberflächentemperaturen $T_{OF}$ desselben oder unterschiedlicher Siliciumstäbe bestimmt. $T_{OF}$ ist eine wichtige Einflussgröße, die während der Abscheidung typischerweise kontrolliert und durch Variation des Stromdurchgangs angepasst werden kann. Grundsätzlich nimmt der Wärmefluss, der die Siliciumstäbe verlässt, mit der Abscheidezeit zu, da der Durchmesser und damit die Oberfläche der Stäbe wächst. Während der Abscheidung ist also üblicherweise eine Anpassung der Stromstärke erforderlich.

$Ts$ kann bestimmt werden durch die Addition eines konstanten oder variablen Temperaturoffsets zur Oberflächentemperatur $T_{OF}$. Der Temperaturoffset liegt dabei bevorzugt im Bereich von 0 bis 120 K, besonders bevorzugt im Bereich von 30 bis 80 K. Dadurch kann berücksichtigt werden, dass $Ts$ über der gemessenen Oberflächentemperatur $T_{OF}$ liegen kann. Der Temperaturoffset ist generell umso größer je größer die Heizleistung $U*I$ bzw. der Stabdurchmesser $d$ ist. Der Temperaturoffset kann somit variabel in Abhängigkeit von $U*I$ und $d$ vorgegeben werden.

Vorzugsweise erfolgt die Messung von $T_{OF}$ mit mindestens einer Thermographiekamera (Strahlungspyrometer), insbesondere von außerhalb des Reaktors durch ein Sichtfenster. Für die Bestimmung von $T_{OF}$ (insbesondere hinsichtlich der Positionierung des Messgeräts und dem Ort der Messung) gilt grundsätzlich dasselbe wie für die Durchmesserbestimmung. Insofern kann auf die obigen Ausführungen verwiesen werden. Ferner kann auf WO 2019/110091 A1 verwiesen werden.

Da sowohl der Durchmesser als auch $T_{OF}$ mit einer Thermographiekamera ermittelt werden können, kann die Bestimmung beider Werte an demselben Siliciumstab erfolgen.

$Ts$ kann auch bestimmt werden gemäß

$$T_S = k \frac{U*I}{A_{OF}*\lambda} * (r_{II} - r_S) + T_{OF},$$

mit

$k$ = Anpassungsfaktor,
$A_{OF}$ = Staboberfläche entlang der Stablänge,
A = thermische Wärmeleitfähigkeit von Silicium,
$r_{II}$ = Radius des Siliciumstabs,
$r_S$ = Radius des Querschnittsflächenschwerpunkts des Siliciumstabs.

Dieses Modell zur Bestimmung von $Ts$ wird anhand des Diagramms in der Figur 1 veranschaulicht. Das Modell beruht auf der gemessenen $T_{OF}$, dem Stabdurchmesser $d$ ($2*r_{II}$), der elektrischen Heizleistung ($U*I$) und der thermischen Leitfähigkeit A. Die thermische Leitfähigkeit A von Silicium beträgt im relevanten Temperaturbereich von 800 bis 1300°C etwa 18 bis 30 W/(m*K). Für A kann ein konstanter Wert von 22 W/(m*K) zugrunde gelegt werden.

Bei $U*I/A_{OF}*\lambda$ handelt es sich um den Temperaturgradient $gradT_{OF}$ an der Staboberfläche, wobei letztere über $n*d*L$ bestimmt wird. Dieser Ansatz berücksichtigt, dass die gesamte elektrische Leistung grundsätzlich als Wärmestrom über die Staboberfläche geleitet wird. Da der Siliciumstab in guter Näherung zylindrisch ist (dies kann in guter Näherung auch von der Brücke angenommen werden) und sich die elektrische Heizleistung über den Stabquerschnitt verteilt, nimmt der Temperaturgradient in Richtung des Stabinneren ab. In der Stabmitte nimmt der Temperaturgradient den Wert Null an (die 1. Ableitung der Kurve bei $r_{II}$ entspricht der Geraden (Anstieg) $gradT_{OF}$). Als $Ts$ wird nach diesem Modell die Temperatur definiert, welche im Flächenschwerpunkt des Stabquerschnitts herrscht ($T_S$ bei $r_S$). Der Flächenschwerpunkt ist derjenige Radius $r_S$, bei dem die Fläche eines inneren Kreises gleich der eines äußeren Rings ist. Durch Multiplikation des Temperaturgradienten $gradT_{OF}$ mit dem Anpassungsfaktor $k$ ergibt sich $k*gradT_{OF}$ (gestrichelte Linie neben der Tangente $gradT_{OF}$) Zusammen mit dem Abstand zur Staboberfläche ($r_{II}-r_S$) und der Addition zu $T_{OF}$ kann die Bestimmung von $Ts$ erfolgen. Der Anpassungsfaktor $k$ liegt dabei vorzugsweise in einem Bereich von 0 und 1,2, besonders bevorzugt von 0,7 und 0,9. Ein typischer Wert für $k$ ist z.B. 0,8.

Die Abscheidung wird durch Variation zumindest eines Parameters, ausgewählt aus der Gruppe mit $U$, $I$, $T_{OF}$, Reaktionsgaszusammensetzung und Volumenstrom, gesteuert.

In der Regel geschieht dies durch eine kontinuierliche oder diskontinuierliche Rückkopplung am Prozessleitstand, wobei in Abhängigkeit der ermittelten Morphologiekennzahl $M$ eine Anpassung der Parameter erfolgt, um so einen Sollwert für $M$ zu erzielen.

Die Spannung $U$ (pro Stabpaar) liegt in einem Bereich von 50 und 500 V, bevorzugt von 55 und 250 V, insbesondere bevorzugt von 60 und 100 V.

Die Stromstäke $I$ (pro Stabpaar) liegt in einem Bereich von 500 und 4500 A, bevorzugt von 1500 und 4000 A, insbesondere bevorzugt von 2500 und 3500 A.

$T_{OF}$ liegt in einem Bereich von 950 bis 1200°C, bevorzugt von 1000 bis 1150°C.

Das Reaktionsgas enthält vor Eintritt in den Reaktor Wasserstoff in einem Anteil von 50 bis 90%, bevorzugt von 60 bis 80%. Die Bestimmung der Zusammensetzung des Reaktionsgases kann vor der Zuleitung zum Reaktor über Raman- und Infrarotspektroskopie sowie Gaschromatographie erfolgen.

Der Normvolumenstrom (messbar nach DIN EN 1343) des Reaktionsgases beträgt 1500 bis 9000 m³/h, bevorzugt 3000 bis 8000 m³/h.

Durch die Steuerung der Abscheidung lässt sich Polysilicium verschiedenster Qualitäten herstellen (z.B Typ A, B, C und D). Beispielsweise lassen sich auch Siliciumstäbe herstellen, die koaxiale Bereiche unterschiedlicher Morphologie aufweisen. Mit besonderem Vorteil kann der gesamte Abscheidungsprozess den jeweiligen Qualitätsvorgaben angepasst werden und so immer die wirtschaftlichste Fahrweise des Reaktors gewählt werden.

**Fig. 1** zeigt graphisch ein Modell zur Bestimmung der mittleren Stabtemperatur $Ts$.

**Fig. 2** zeigt die Querschnittsfläche eines Polysiliciumstabs.

**Fig. 3** zeigt den Verlauf der Morphologiekennzahl $M$ in Abhängigkeit des Stabdurchmesser $d$ für zwei Typen von Polysilicium.

**Beispiele**

Beispiel 1: diskretisierte Bestimmung von $M$.

Es wird die Bestimmung von M für einen Abschnitt eines Polysiliciumstabs des Typs C dargestellt, welcher in einem Zeitabschnitt gewachsenen ist.

In der Fig. 1 entspricht der Bereich *I* einem Polysiliciumstab mit dem Durchmesser $d_I$ und der Temperatur $T_I$ zu einer Zeit $t_0$. der Bereich *II* entspricht einem in einem Zeitabschnitt $\Delta t = t_1 - t_0$ gewachsenen Stababschnitt mit einer Stärke $d_{II} - d_I$ (Durchmesserzuwachs) und der Temperatur $T_{II}$. Die Bestimmung von $M$ des Bereichs II erfolgt nach

$$M_{II} = \left(\frac{1}{R_{1,I+II}} - \frac{1}{R_{1,I}}\right)^{-1} \left(\frac{1}{R_{2,I+II}} - \frac{1}{R_{2,I}}\right)$$

mit

$$R_{1,I+II} = = \frac{U_{(t_1)}}{I_{(t_1)}} \; ; \; R_{1,I} = \frac{U_{(t_0)}}{I_{(t_0)}}$$

$$R_{2,I+II} = \rho(T_{II})\frac{4L}{d_{II}^2\pi} \; ; \; R_{2,I} = \rho(T_I)\frac{4L}{d_I^2\pi}$$

Tabelle 1: Werte Beispiel 1

| Zeitpkt. | Bereich | d | $T_{OF}$ | $T_s$ | $\rho$ | L | $R_2$ | U | I | $R_1$ | M |
|---|---|---|---|---|---|---|---|---|---|---|---|
| | | [m] | [°C] | [°C] | [Ω*m] | [m] | [Ω] | [V] | [A] | [Ω] | - |
| t_0 | I | 0,09 | 1005 | 1073 | 0,000089 | 2,8 | 0,031 | 95 | 1450 | 0,065 | 1,67 |
| t_1 | I+II | 0,1 | 1000 | 1080 | 0,000087 | 2,8 | 0,030 | 87 | 1700 | 0,0511 | 1,65 |

(fortgesetzt)

| Zeitpkt. | Bereich | d | $T_{OF}$ | $T_s$ | $\rho$ | L | $R_2$ | U | I | $R_1$ | M |
|---|---|---|---|---|---|---|---|---|---|---|---|
| | | [m] | [°C] | [°C] | [Ω*m] | [m] | [Ω] | [V] | [A] | [Ω] | - |
| t_1 | II | | | | | 0,146 | | | | 0,2338 | 1,59 |

Tabelle 2: Werte für p

| T [°C] | $\rho$ [Ω*m] |
|---|---|
| 800 | 0,00032 |
| 900 | 0,00019 |
| 1000 | 0,00012 |
| 1100 | 0,00008 |
| 1200 | 0,00006 |
| 1300 | 0,00004 |

Beispiel 2: Abscheidung von Polysilicium Typ B und Typ C

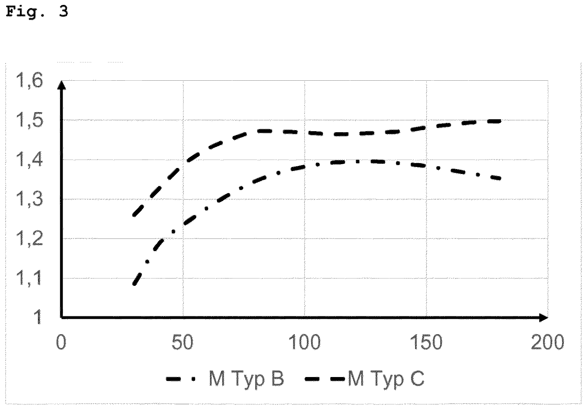

In der Figur 3 ist der Verlauf von M für zwei verschiedene Abscheidungsprozesse, also 2 unterschiedliche Polysilicium-Qualitäten, gegen den Siliciumstabdurchmesser d [mm] aufgetragen. Bei der gestrichelten Kurve (---) handelt es sich um die Herstellung von Typ C. Bei der in Strichen und Punkten dargestellten Kurve (- -) handelt es sich um die Herstellung von Typ C. Typ B ist kompakter als Typ C und wird für sensiblere Anwendungen herangezogen. Typ B sollte einen Wert für $M$ von 1,2 bis 1,4, während Typ C einen Wert von 1,4 bis 1,7 aufweisen sollte. Beide Prozesse wurden in demselben Siemens-Reaktor jedoch mit unterschiedlichen Vorgaben für mindestens einen Parameter aus der Gruppe mit $U, I, T_{OF}$, Reaktionsgaszusammensetzung und Volumenstrom durchgeführt. Die Bestimmung von $M$ erfolgte kontinuierlich während der gesamten Abscheidedauer. Der Stabdurchmesser wurde an zwei Stäben mit einer CCD-Kamera und Bildbearbeitung bestimmt. Die Bestimmung von $T_{OF}$ erfolgte ebenfalls an zwei Stäben mit einem Pyrometer.

Beide Prozesse beginnen mit kompakt abgeschiedenem Polysilicium mit Werten für $M$ nahe bei 1. Es wurden zudem Filamentstäbe aus sehr kompaktem Silicium verwendet. Anschließend steigt $M$ für beide Prozess an. Bei der Herstellung von Typ C wurde für $M$ schon kurz nach dem Beginn der Abscheidung ein relativ steiler Verlauf gewählt. Das angestrebte Niveau von $M$ bei 1,4 bis 1,7 sollte schon bei einem Stabdurchmesser von 50 mm erreicht werden. Anschließend wurde $M$ auf einen Wert von ca. 1,45 bis 1,5 eingestellt. Für die Herstellung von Typ B wurde bis zu einem Durchmesser von etwa 100 mm ein flacherer Verlauf von $M$ vorgegeben. Ab einem Durchmesser von ca. 140 mm wurde $M$ wieder erniedrigt, um die äußeren ca. 40 mm kompakter abzuscheiden.

Anhand des Beispiels wird deutlich, wie komfortabel anhand der Kennzahl $M$ die Abscheidung zur Herstellung verschiedenster Polysilciumtypen gesteuert werden kann.

## Patentansprüche

1.  Verfahren zur Herstellung von polykristallinem Silicium, umfassend Einleiten eines Reaktionsgases, das neben Wasserstoff Silan und/oder zumindest ein Halogensilan enthält, in einen Reaktionsraum eines Gasphasenabscheidungsreaktors, wobei der Reaktionsraum mindestens einen durch Stromdurchgang erhitzten Filamentstab umfasst, auf welchem durch Abscheidung Silicium unter Bildung eines polykristallinen Siliciumstabs abgeschieden wird, wobei zur Bestimmung der Morphologie des Siliciumstabs während der Abscheidung bei einer Stabtemperatur $T_s$

    - ein erster Widerstandswert $R_1$ des Siliciumstabs bestimmt wird nach

$$R_1 = \frac{U}{I}$$

mit

  $U$ = Spannung zwischen zwei Enden des Siliciumstabs,
  $I$ = Stromstärke

- ein zweiter Widerstandswert $R_2$ des Siliciumstabs bestimmt wird nach

$$R_2 = \rho \frac{L}{A}$$

mit

  $\rho$ = spezifischer Widerstand von Silicium,
  $L$ = Länge des Siliciumstabs,
  A = Querschnittsfläche des Siliciumstabs,

und aus dem Verhältnis $R_1/R_2$ eine Morphologiekennzahl $M$ berechnet wird, wobei die Abscheidung durch Variation zumindest eines Parameters ausgewählt aus der Gruppe mit $U$, $I$, Oberflächentemperatur $T_{OF}$, Reaktionsgaszusammensetzung und Normvolumenstrom derart gesteuert wird, dass $M$
- zur Herstellung von Typ B Polysilicium einen Wert von 1,2 bis 1,4,
- zur Herstellung von Typ c Polysilicium einen Wert von 1,4 bis 1,7 oder
- zur Herstellung von Typ D Polysilicium einen Wert größer als 1,7 aufweist,

wobei $U$ in einem Bereich von 50 bis 500 V liegt, $I$ in einem Bereich von 500 bis 4500 A liegt, $T_{OF}$ in einem Bereich von 950 bis 1200°C liegt, der Normvolumenstrom des Reaktionsgases 1500 bis 9000 m³/h und das Reaktionsgas vor Eintritt in den Reaktor Wasserstoff in einem Anteil von 50 bis 90% enthält, und wobei es sich bei $Ts$ um die Oberflächentemperatur $T_{OF}$ des Siliciumstabs oder um den Mittelwert aus zwei oder mehr Oberflächentemperaturen $T_{OF}$ desselben oder unterschiedlicher Siliciumstäbe handelt.

**2.** Verfahren nach Anspruch 1, **dadurch gekennzeichnet, dass** die Kennzahl $M$ während der Abscheidung konstant gehalten wird.

**3.** Verfahren nach einem der vorhergehenden Ansprüche, **dadurch gekennzeichnet, dass** die Bestimmung der Kennzahl $M$ kontinuierlich während der gesamten Abscheidung oder diskontinuierlich zu verschiedenen Zeitpunkten der Abscheidung erfolgt.

**4.** Verfahren nach einem der vorhergehenden Ansprüche, **dadurch gekennzeichnet, dass** die Bestimmung der Kennzahl $M$ diskretisiert in einem Zeitintervall erfolgt, das einem vorgegebenen Zuwachs des Durchmessers des Siliciumstabs entspricht.

**5.** Verfahren nach einem der vorhergehenden Ansprüche, **dadurch gekennzeichnet, dass** zur Bestimmung der Querschnittfläche A des Siliciumstabs mindestens ein Durchmesser des Siliciumstabes und/oder mindestens ein Durchmesser zumindest eines anderen Siliciumstabes bestimmt wird.

**6.** Verfahren nach einem der vorhergehenden Ansprüche, **dadurch gekennzeichnet, dass** die Länge L des Siliciumstabs 2 bis 8 m, bevorzugt 3 bis 7 m, besonders bevorzugt 4 bis 6,6 m, insbesondere 5,6 bis 6,4 m, beträgt.

**7.** Verfahren nach einem der vorhergehenden Ansprüche, **dadurch gekennzeichnet, dass** die Spannung $U$ in einem Bereich von 55 bis 250 V, bevorzugt von 60 bis 100 V, liegt.

**8.** Verfahren nach einem der vorhergehenden Ansprüche, **dadurch gekennzeichnet, dass** die Stromstäke $I$ in einem Bereich von 1500 bis 4000 A, bevorzugt von 2500 bis 3500 A, liegt.

**9.** Verfahren nach einem der vorhergehenden Ansprüche, **dadurch gekennzeichnet, dass** die Temperatur der Staboberfläche $T_{OF}$ in einem Bereich von 1000 bis 1150°C liegt.

**10.** Verfahren nach einem der vorhergehenden Ansprüche, **dadurch gekennzeichnet, dass** das Reaktionsgas vor Eintritt in den Reaktor Wasserstoff in einem Anteil von 60 bis 80% enthält.

**11.** Verfahren nach einem der vorhergehenden Ansprüche, **dadurch gekennzeichnet, dass** der Normvolumenstrom des Reaktionsgases 3000 bis 8000 m$^3$/h beträgt.

**Claims**

**1.** Method for producing polycrystalline silicon, comprising introducing a reaction gas, which in addition to hydrogen contains silane and/or at least one halosilane, into a reaction space of a vapour deposition reactor, wherein the reaction space comprises at least one filament rod which is heated by way of the passage of current and on which by means of deposition silicon is deposited to form a polycrystalline silicon rod, wherein for the determination of the morphology of the silicon rod during the deposition at a rod temperature $T_S$

- a first resistance value $R_1$ of the silicon rod is determined according to

$$R_1 = \frac{U}{I}$$

where

$U$ = voltage between two ends of the silicon rod,
$I$ = current strength

- a second resistance value $R_2$ of the silicon rod is determined according to

$$R_2 = \rho \frac{L}{A}$$

where

$\rho$ = resistivity of silicon,
$L$ = length of the silicon rod,
A = cross-sectional area of the silicon rod,

and a morphology index $M$ is calculated from the ratio $R_1/R_2$, wherein the deposition is controlled by varying at least one parameter selected from the group comprising $U$, $I$, surface temperature $T_{OF}$, reaction gas composition and standard volume flow rate in such a way that $M$
- for the production of type B polysilicon has a value from 1.2 to 1.4,
- for the production of type C polysilicon has a value from 1.4 to 1.7 or
- for the production of type D polysilicon has a value greater than 1.7,

wherein $U$ is in a range from 50 to 500 V, $I$ is in a range from 500 to 4500 A, $T_{OF}$ is in a range from 950 to 1200°C, the standard volume flow rate of the reaction gas is 1500 to 9000 m$^3$/h and the reaction gas prior to entry into the reactor contains hydrogen in a proportion of 50% to 90%, and wherein $Ts$ is the surface temperature $T_{OF}$ of the silicon rod or the arithmetic mean of two or more surface temperatures $T_{OF}$ of the same or different silicon rods.

**2.** Method according to Claim 1, **characterized in that** the index $M$ is kept constant during the deposition.

**3.** Method according to either of the preceding claims, **characterized in that** the index $M$ is determined continuously during the entire deposition or discontinuously at various points in time in the deposition.

**4.** Method according to any of the preceding claims, **characterized in that** the index $M$ is determined in discretized form in a time interval corresponding to a specified growth in the diameter of the silicon rod.

**5.** Method according to any of the preceding claims, **characterized in that** for the determination of the cross-sectional area *A* of the silicon rod at least one diameter of the silicon rod and/or at least one diameter of at least one other silicon rod is determined.

6. Method according to any of the preceding claims, **characterized in that** the length *L* of the silicon rod is 2 to 8 m, preferably 3 to 7 m, particularly preferably 4 to 6.6 m, especially 5.6 to 6.4 m.

7. Method according to any of the preceding claims, **characterized in that** the voltage *U* is in a range from 55 to 250 V, preferably from 60 to 100 V.

8. Method according to any of the preceding claims, **characterized in that** the current strength *I* is in a range from 1500 to 4000 A, preferably from 2500 to 3500 A.

9. Method according to any of the preceding claims, **characterized in that** the temperature of the rod surface $T_{OF}$ is in a range from 1000 to 1150°C.

10. Method according to any of the preceding claims, **characterized in that** the reaction gas prior to entry into the reactor contains hydrogen in a proportion of 60% to 80%.

11. Method according to any of the preceding claims, **characterized in that** the standard volume flow rate of the reaction gas is 3000 to 8000 m$^3$/h.

**Revendications**

1. Procédé de préparation de silicium polycristallin, comprenant l'introduction d'un gaz de réaction qui contient, outre de l'hydrogène, du silane et/ou au moins un halogénosilane, dans une chambre de réaction d'un réacteur de dépôt en phase gazeuse, la chambre de réaction comprenant au moins une tige filamentaire chauffée par un passage de courant, sur laquelle se dépose, par séparation, du silicium avec formation d'un barreau de silicium polycristallin, dans lequel, pour la détermination de la morphologie du barreau de silicium pendant le dépôt à une température de barreau $T_s$

- une première valeur de résistance $R_1$ du barreau de silicium est déterminée selon

$$R_1 = \frac{U}{I}$$

où

U = la tension entre deux extrémités du barreau du silicium,
I = l'intensité du courant

- une deuxième valeur de résistance $R_2$ du barreau de silicium est déterminée selon

$$R_2 = \rho \frac{L}{A}$$

où

$\rho$ = la résistance spécifique du silicium,
L = la longueur du barreau de silicium,
A = la section transversale du barreau de silicium, et un indicateur de morphologie M est calculé à partir du rapport $R_1/R_2$, le dépôt étant régulé par la variation d'au moins un paramètre choisi dans le groupe constitué par U, I, température de surface $T_{OF}$, composition du gaz de réaction et flux volumique nominal de telle sorte que M présente

- pour la préparation de polysilicium de type B, une valeur de 1,2 à 1,4,

- pour la préparation de polysilicium de type C, une valeur de 1,4 à 1,7 ou
- pour la préparation de polysilicium de type D, une valeur supérieure à 1,7,

U étant situé dans une plage de 50 à 500 V, I étant situé dans une plage de 500 à 4500 A, $T_{OF}$ étant situé dans une plage de 950 à 1200°C, le flux volumique nominal du gaz de réaction étant de 1500 à 9000 m$^3$/h et le gaz de réaction contenant, avant l'entrée dans le réacteur, de l'hydrogène en une proportion de 50 à 90% et $T_s$ étant la température de surface $T_{OF}$ du barreau de silicium ou une valeur moyenne de deux températures de surface ou plus $T_{OF}$ du même barreau de silicium ou de différents barreaux de silicium.

2. Procédé selon la revendication 1, **caractérisé en ce que** l'indicateur M est maintenu constant pendant le dépôt.

3. Procédé selon l'une des revendications précédentes, **caractérisé en ce que** la détermination de l'indicateur M est effectuée en continu pendant toute la durée du dépôt ou de manière discontinue à différents moments du dépôt.

4. Procédé selon l'une quelconque des revendications précédentes, **caractérisé en ce que** la détermination de l'indicateur M est effectuée de manière discrétisée dans une période de temps qui correspond à une croissance prédéfinie du diamètre du barreau de silicium.

5. Procédé selon l'une des revendications précédentes, **caractérisé en ce que**, pour la détermination de la surface transversale A du barreau du silicium, au moins un diamètre du barreau de silicium et/ou au moins un diamètre d'au moins un autre barreau du silicium est/sont déterminé(s).

6. Procédé selon l'une des revendications précédentes, **caractérisé en ce que** la longueur L du barreau de silicium est de 2 à 8 m, de préférence de 3 à 7 m, de manière particulièrement préférée de 4 à 6,6 m, en particulier de 5,6 à 6,4 m.

7. Procédé selon l'une des revendications précédentes, **caractérisé en ce que** la tension U est située dans une plage de 55 à 250 V, de préférence de 60 à 100 V.

8. Procédé selon l'une des revendications précédentes, **caractérisé en ce que** l'intensité du courant I est située dans une plage de 1500 à 4000 A, de préférence de 2500 à 3500 A.

9. Procédé selon l'une des revendications précédentes, **caractérisé en ce que** la température de la surface du barreau $T_{OF}$ est située dans une plage de 1000 à 1150°C.

10. Procédé selon l'une des revendications précédentes, **caractérisé en ce que** le gaz de réaction contient, avant l'entrée dans le réacteur, de l'hydrogène en une proportion de 60 à 80%.

11. Procédé selon l'une des revendications précédentes, **caractérisé en ce que** le flux volumique nominal du gaz de réaction est de 3000 à 8000 m$^3$/h.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2077252 A2
- EP 2444373 A1
- EP 2662335 A1
- US 20120322175 A1
- EP 1992593 A2
- WO 2015014590 A1
- WO 2014173596 A1
- WO 2009047107 A2
- WO 2019110091 A1

**In der Beschreibung aufgeführte Nicht-Patentliteratur**

- **MOSKAU.** *Chemische Enzyklopädie,* 1990, vol. 2, 1007